Europäisches Patentamt

European Patent Office

Office européen des brevets

(11) Publication number: **0 025 676**
**B1**

(12) **EUROPEAN PATENT SPECIFICATION**

(45) Date of publication of patent specification: **30.01.85**

(21) Application number: **80303121.0**

(22) Date of filing: **05.09.80**

(51) Int. Cl.⁴: **B 65 G 17/02,** B 65 G 21/16, B 65 G 21/20

(54) **Slide conveyor with side stabilizers.**

(30) Priority: **11.09.79 US 74345**

(43) Date of publication of application:
**25.03.81 Bulletin 81/12**

(45) Publication of the grant of the patent:
**30.01.85 Bulletin 85/05**

(84) Designated Contracting States:
**BE CH DE FR GB IT LI NL SE**

(56) References cited:
**EP-A-0 001 182
DE-B-1 124 424
DE-B-1 781 252
DE-C-1 039 924
DE-U-1 736 986
DE-U-1 751 186
DE-U-1 914 571
GB-A- 783 200
US-A-3 107 778
US-A-3 169 631
US-A-3 707 218
US-A-3 934 708**

(73) Proprietor: **Alldredge, Robert Louis
130 Pearl Street Apt. 1108
Denver Colorado, 80203 (US)**

(72) Inventor: **Alldredge, Robert Louis
130 Pearl Street Apt. 1108
Denver, Colorado 80203 (US)**
Inventor: **Deltour, Robert J.
16227 E. Arkansas Drive
Aurora, Colorado (US)**

(74) Representative: **Mayes, Stuart David et al
BOULT, WADE & TENNANT 27 Furnival Street
London, EC4A 1PQ (GB)**

Courier Press, Leamington Spa, England.

## Description

The invention relates to an improved conveyor that is operable as a drag conveyor for substantially its entire length, the conveyor being of the type having an upper run and a lower run with an endless, longitudinally extending belt adapted to follow a laterall and vertically curved path; a longitudinally extending conveyor track assembly having a top runnings surface supporting the belt in the upper run; a conveyor chain capable of both lateral and vertical bending with the path of the belt; a belt carriage connected to the conveyor belt and extending transversely to the belt and supporting the belt above the chain along the upper run of the conveyor; and a pair of laterally spaced stabilizer means flanking the central connecting means and overlying the top running surface.

The closest known prior art, which is reflected in the main claim, is West German Utility Model No. 1,736,986, which discloses that a belt conveyor mounted on rollers for travel along a pair of rails can be directed through horizontal curves by elevating the conveyor belt such that the rollers are above the rails and the belt is supported primarily on the conveyor chain, which is guided around the curves by pulley-type wheels on the rail understructure. In curves, the elevated running rollers serve to stabilize the belt against uneven loading. At each end of the curve, such a conveyor travels in the known manner on the aforesaid rollers and rails, which reduces overall friction, balances the conveyor in non-curved sections, and adds end-stabilization to the conveyor section in the curve. Several technical problems are evident from the limitations shown in this prior art patent. Primarily, the limited application of the chain support concept shows that friction shows that such chain is likely to sag as the weight formance of elliptical link chain in the curves shows that such chain is likely sag as the weight bearing links pass between the pulley-type wheels guiding the chain in the curves. Balance is a further problem, as the end-stabilization provided by the normal rail-mounted lengths of the conveyor suggest that the full length of such a conveyor could not successfully operate in the chain-supported mode.

Conveyor belts capable of following a helical pathway are known from United States Patents No. 2,701,050 to Steinborn, No. 2,836,050 to Horth, No. 3,169,631 to Knappe, and No. 4,144,965 to Alldredge, the last mentioned patent teaching a flexible rail assembly for such conveyors to permit travel in curves. All of these patents have supported the use of a convoluted rubber belt that is mounted on carriages for travel on rail-mounted rollers, much as taught in the above-mentioned West German Utility Model.

The limitations of the above patens are overcome in the present invention by an improved conveyor of the type indicated above. The improvement comprises the addition of a longitudinally oriented chain slide surface on the top running surface of the track assembly, the slide surface having a bottom wall supported against the top running surface and supporting the lower face of the chain directly thereon along substantially the entire length of the conveyor. The slide surface includes a pair of spaced apart opposite side walls extending substantially normally to the bottom wall and enclosing the sides of the chain, and a pair of opposed inwardly directed top flanges joined to the side walls and forming a longitudinal slot between them for permitting passage of the central connecting means of the carriage and for directly supporting the chain on said flanges along the lower run of the conveyor. On each lateral side of the slide surface, the top running surface includes a stabilizer operating surface. The pair of stabilizers overlies the operating surfaces when the chain overlies the slide surface bottom wall, the stabilizers being oriented with respect to the central connecting means of the carriage such that, substantially throughout the upper run of the conveyor, when the carriage is laterally evenly weighted, the chain is in force bearing contact with the slide surface and the stabilizers are without force bearing contact with the operating surfaces. The conveyor chain is of a type, known per se, formed of alternating pin links and block links, the central connecting means being joined only to the block links which have a transverse hole formed at each of their ends for receiving a pin of a pin link, and the hole is sufficiently larger in diameter than the pin that the block link is capable of a predetermined degree of lateral tilting before the block link applies twisting torque to the pin. In addition, the stabilizers are oriented with respect to the central connecting means of the carriage such that a stabilizer contacts an operating surface in force bearing relationship when the carriage is laterally unevenly weighted, prior to the time that a block link applies substantial twisting torque to a pin.

Examples of the invention will now be described with reference to the accompanying drawings in which:—

Figure 1 is a vertical cross-section taken normally to the longitudinal axis of the conveyor, with the belt omitted.

Figure 2 is a top plan view of a straight track section.

Figure 3 is a top plan view of a horizontally curved track section.

Figure 4 is a side elevational view of a vertically curved track section.

Figure 5 is a top plan view of the vertically curved track section of Figure 4.

Figure 6 is an exploded view of the conveyor.

Figure 7 is a perspective view of an end fragment of the sliding surface, showing the beveled end thereof.

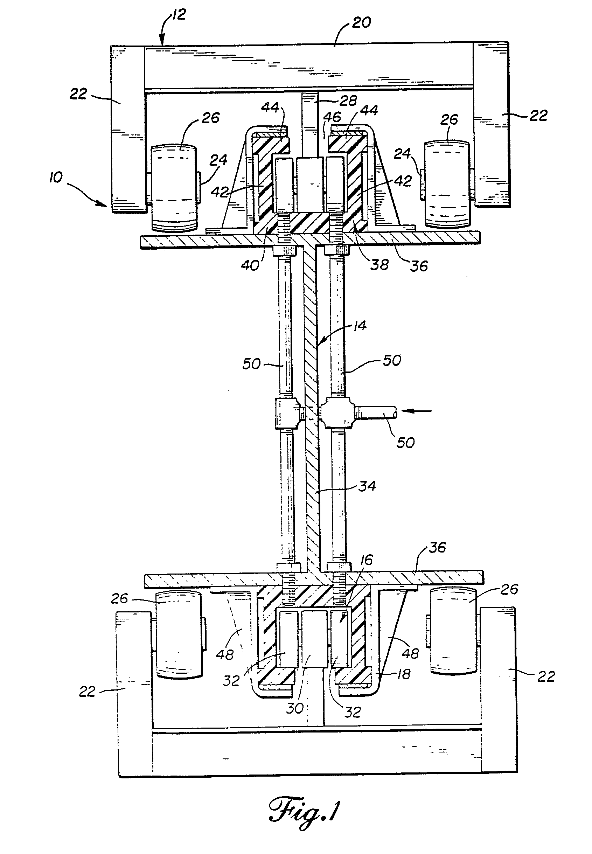

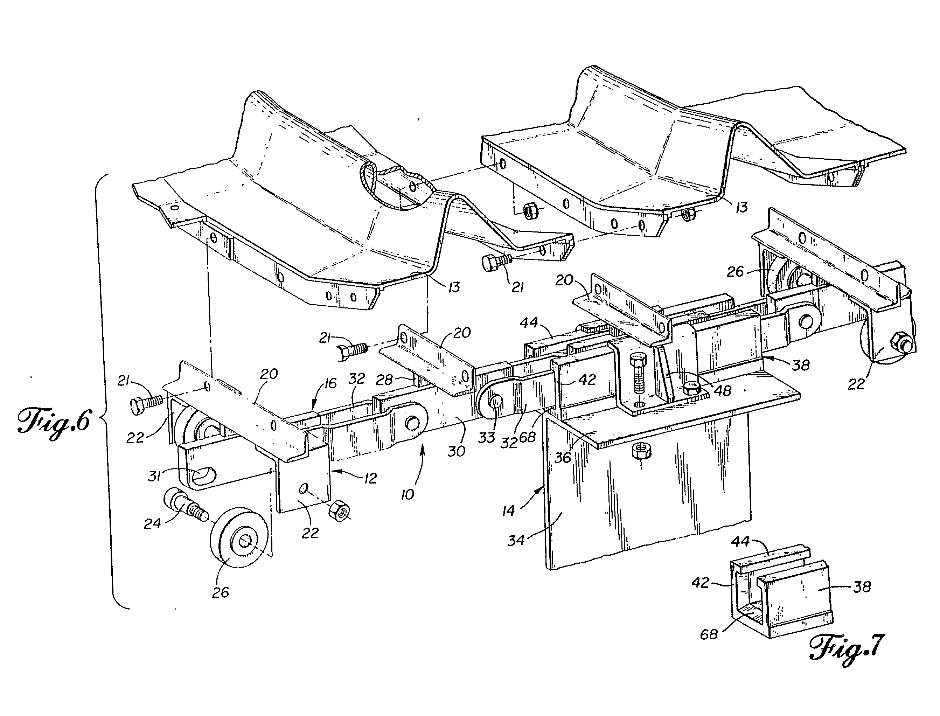

The conveyor 10 of Figures 1 and 6 is a drag-type conveyor having supplemental stabilizer wheels adapted for only intermittent use. Illustrated in the figures is a conveyor belt support carriage 12 adapted to carry a conveyor belt 13, Figure 6, of a known type formed from resilient material such as rubber and having convolutions separating intermediate material-carrying pans. This type of belt is more fully disclosed in United States Patent 2,701,050 to Steinborn, for which teaching that patent is incorporated by reference. The belt is formed in sections joined together by transverse flanges depending from the belt, and these flanges may be fastened by conventional nuts and bolts, which may also serve to join the belt to the transverse carriages 12. A longitudinal track assembly 14 having the general cross-sectional shape of an I-beam carries the carriage on the outer surfaces of the I-beam flanges. Specifically, the carriage is connected to the conveyor chain 16 that is longitudinally carried in plastic channel 18 mounted on the outer surface of the I-beam flange. The chain is dragged through the channel in the known manner by means of a powered sprocket engaging the chain at a point in the length of the conveyor run, usually at one end of the track assembly.

Carriage 12 includes a central attachment bar 20 adapted to be connected to the convoluted conveyor belt 13, for example by bolts 21 extending through holes in the bar 20 and mating holes in the conveyor belt flange. Bar 20 is transverse to the longitudinal axis of the belt and I-beam track assembly and carries at each lateral end a depending stabilizer wheel support arm 22, in turn carrying a stabilizer wheel axle 24 parallel to carriage 20 and transverse to the axis of chain 16. A wheel or roller 26 is mounted for rotation on axle 24.

The carriage 12 is connected to the conveyor chain 16 by means of a chain support arm 28 extending from the attachment bar 20. The chain is a block and pin link chain of the general type described in U.S. Patent 3,093,235 to Imse, incorporated by reference for the teaching of this chain construction. Arm 28 extends from the approximate midpoint of bar 20 to the upper side of a block link 30 having a transverse hole 31 formed in each longitudinal end. Each pin link 32 is formed from a pair of longitudinal link plates joined together by a transversely extending pin 33 that also passes through the hole 31 at one end of each block link. The block links are thus intermediate a pair of pin links, and the holes in the block links are sized with respect to the pins in the pin links such that the pins have considerable wobble in the holes 31. As best shown in Figure 6, holes 31 may be elongated longitudinally so that the chain can flex laterally for travel in an arc, in addition to the normal flexing for travel over a sprocket. The chain support arm may be attached to each block link near the longitudinal center of the link for uniform weight distribution against the track assembly.

The track assembly 14 consists primarily of an I-beam having the desired preformed contour to define a segment of the intended path of the conveyor. Each such I-beam has a central, generally upstanding web 34 joining together top and bottom flanges 36, respectively forming the top and bottom running surfaces of the conveyor track assembly. Each flange carries a plastic slide surface or trough 38 over or through which the chain 16 is drawn. The preferred composition of the trough 38 is ultra high molecular weight (UHMW) polyethylene, although other low friction materials such as Teflon are also suitable. In the embodiment of Figure 1, the UHMW trough encapsulates the chain on three sides with a bottom wall 40 and a pair of opposite walls 42. At the top of the side walls 42 are inwardly directed flanges 44 partially closing the top of the trough but defining a longitudinal opening slot 46 through which the chain support arm extends. The width of the slot 46 is narrower than the transverse dimension of the chain so that the chain will be retained and ride on flanges 44 in the lower or return run of the conveyor, as shown in the lower portion of Figure 1. Suitable gussets and buttresses 48 support the UHMW slide surfaces on the I-beam flange.

The operation of the conveyor 10 involves primarily the sliding of chain 16 over the UHMW slide surface, thereby drawing the entire conveyor along the path defined by the I-beam track assembly. As is well known in the conveyor art, the chain may engage a motor driven sprocket at one end of the track assembly to drive the chain and guide the chain from the top or operative run to the bottom or return run. At the opposite end of the I-beam track assembly an idler sprocket performs the guiding function. The UHMW slide surface provides a natural lubricity to reduce friction of conveyor movement, and, in addition, the design of the I-beam track assembly permits excellent access for the addition of lubricating materials into the trough. For example, lubricant injection conduits 50 may extend through the I-beam flanges and web and be connected to a supply of any suitable lubricating compound.

Because the majority of conveyor weight is carried on the chain 16, stabilizer wheels 26 bear weight only when the conveyor load has become unbalanced, tipping the carriage to either side. Under such conditions, one of the wheels 26 will momentarily ride on the flange 36 and thereby prevent substantial tipping of the load. However, in normal, balanced operation, the wheels 26 are supported by the carriage at a small distance above the flange so that no weight is carried by these wheels. The chain 16 permits lateral bending between its links by virtue of clearances in the fit of the pin links in the transverse holes in the block links, with the result that the block links in the chain are capable of tipping with respect to the pin links during periods of load imbalance. The normal clearance between the wheels 26 and I-beam flange is desired to be such that when the carriage tips to one side, the appropriate wheel 26 will strike the I-beam flange before the block link has tipped to a sufficient degree that it exhausts the clearance with the pin link. In this manner, the chain is prevented from becoming twisted in the trough or from applying an excessive weight to one side of the trough, and the contact area between the chain and trough surface is maintained at a relatively constant figure.

For purposes of comparison, the forces generated in the present conveyor may be compared to forces generated in the type of conveyor taught in United States Patent No. 4,144,965, using substantially the same convoluted conveyor belt as the present invention but supporting the belt entirely on rollers operating in channel shaped rails. In such prior conveyors travelling through a horizontal curve of 72 inch (183 cm.) radius, with 40 inch (102 cm) carriage spacing and 4000 lb (1814 kg) chain tension, force is given by:

$$F = 4000 \times (40/72) = 2222 \text{ lb (1007 kg)}$$

If the rollers of the prior art conveyor are 3 in. (7.6 cm) in diameter and surface contact area is 1/8 sq in. (.81 sq cm), forces are approximately 20,000 lb/sq in. (1406 kg/sq cm).

With the present conveyor under the same conditions, and having a 4 inch (10 cm) link in the chain, forces are as follow:

$$F = 4000 \times (4/72) = 222 \text{ lb (101 kg)}$$

Contact area is approximately 1 sq in. (6.5 sq cm), with the resultant unit force being 222 lb/sq in. (15.5 kg/sq cm), or about one percent of the unit force produced by the equivalent roller-supported conveyor under the same conditions. The lower unit forces permit the use of less expensive materials, such as UHMW polyethylene for the slide surface and for the stabilizer wheels. In addition, greater latitude is available in radius of curvature for the conveyor base and in vertical height change of the conveyor run.

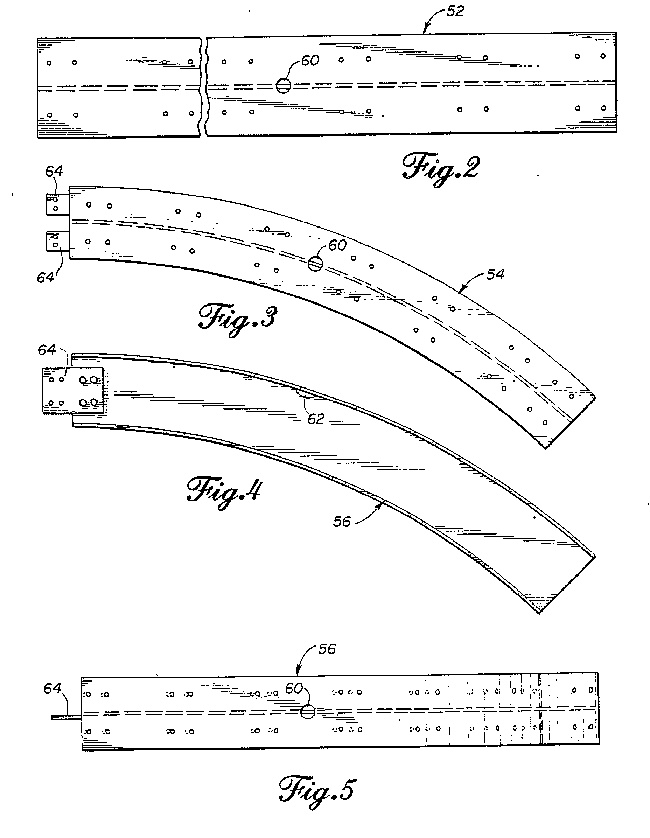

A further aspect of the conveyor is illustrated in Figures 2—5, showing sections of the I-beam base that may be fabricated. Straight I-beam sections 52, Figure 2, may be formed from, for example, six gage steel flats 9 inches (20 cm) wide. Horizontally curving section 54 and vertically curving section 56, Figures 3—5, may have their flanges formed from flame-cut seven gage circle sections. Any of these flange sections may be punched with holes 58 in a standard repeating sequence to accommodate all of the gussets and buttresses used to support the slide surfaces. In addition, drop-out holes 60 may be prepunched in the flange surfaces in predetermined locations to mate with corresponding drop-out holes in the bottom wall 40 of the slide surface. The drop-out holes are slightly larger diameter than the width of slot 46 so that substantially any foreign object capable of entering the slide trough can be discharged through the hole. The I-beam web 34 is undercut, as at 62 in Figure 4, directly under the location of a drop-out hole to permit adequate room for removal of foreign objects. Other prepunched holes in the flange may accommodate lubricant pipes 50.

The prepunched hole pattern in the base flanges permit the UHMW polyethylene slide surfaces to be bolted to the flanges in good registry with the intended path of the conveyor. An entire conveyor of desired configuration may be assembled by combining the various shaped I-beam sections with lap plates 64, bolted between adjacent sections. The sections may be fabricated in standard predetermined lengths and curvatures, such as 2, 4, 6, 8 and 10 foot (.6, 1.2, 1.8, 2.4 and 3.0 m) lengths and curved sections of 6, 12 and 18 ft (1.8, 3.7 and 5.5 m) radii and of 22 and 45 degrees of curvature either horizontally or vertically. At the joints between sections it may be anticipated that the I-beams will not be in perfectly smooth alignment, but a further advantage of the conveyor is that machining for perfect alignment is not required. Rather, at each joint, shims may be placed under or behind one or both of the slide surfaces on one end or the mating end to bring the slide surfaces into acceptable alignment. The ends of the slide surfaces may be beveled as at 68, Figure 7, and, therefore, the alignment need not be precise. Prefabricated sections may be cut to desired length for production of non-standard conveyor lengths, and such cut off sections aligned with standard sections previously described.

Various modifications of the new conveyor are possible, including track assembly contour, slide surface contour, and the method of attaching the slide surface to the underlying flange of the track assembly. The ability of the conveyor to negotiate lateral curves permits the lower or return run to be eliminated in favor of a laterally closed conveyor loop. In this instance, the track assembly may have the cross-sectional contour of a T-beam rather than an I-beam, as suggested in the cut-away view of the track assembly in Figure 6. When it is thus unnecessary to support the conveyor carriages in an inverted position the slide surface may have a more open top, eliminating the top flanges 44. It is also possible to eliminate the use of buttresses and gussets to clamp the UHMW polyethylene slide surface to the beam flange 36 in may or all embodiments of the conveyor, instead bolting or otherwise fastening the slide surface directly to the flange 36. The means for interconnecting beam sections may be other than lap plates, or may be a combination of lap plates on different parts of the beam sections, such as lap plates connecting adjacent webs on some beams and connecting adjacent flanges on other beams. Floor, wall, or ceiling mounted legs may provide support to the track assembly and simultaneously provide joining means between beam sections.

The above description has been provided by way of example and not limitation, which is imposed only by the following claims.

## Claims

1. An improved conveyor that is operable as a drag conveyor for substantially its entire length, the conveyor being of the type having an upper and a lower run with an endless, longitudinally extending belt (13) adapted to follow a laterally and vertically curved path; a longitudinally extending conveyor track assembly (14) having a top running surface (36) supporting the belt in the upper run; a conveyor chain (16) capable of both lateral and vertical bending with the path of the belt; a belt carriage (12) connected to the conveyor belt (13) and extending transversely thereto, having a central connecting means (28) joining the carriage to the conveyor chain (16) substantially at the transverse center of the belt (13) and supporting the belt above the chain along the upper run of the conveyor; and a pair of laterally spaced stabilizer means (26) flanking the central connecting means (28) and overlying the top running surface; characterized in that it comprises:

(a) a longitudinally oriented chain slide surface (38) carried on said top running surface (36) and having a bottom wall (40) supported against the top running surface (38) and supporting the lower face of the chain (6) directly thereon along substantially the entire length of the upper run of the conveyor, the slide surface having a pair of spaced apart opposite side walls (42) extending substantially normally to the bottom wall (40) and enclosing the sides of the chain, and the slide surface (38) further including a pair of opposed inwardly directed top flanges (44) joined to the side walls (42) and forming a longitudinal slot between them for permitting passage of said central connecting means (28) and supporting the chain directly on said flanges in the lower run of the conveyor, said top running surface including on each lateral side of the slide surface a stabilizer operating surface (36);

(b) said pair of laterally spaced stabilizer means (26) overlying the stabilizer operating surfaces (36) when the chain (16) overlies said slide surface bottom wall (40), the stabilizer means (26) being oriented with respect to the central connecting means (28) and chain (16) such that, substantially throughout the upper run of the conveyor, when the carriage (12) is laterall evenly weighted, the chain is in force bearing contact with the slide surface (38) and the stabilizer means (26) are without force bearing contact with said operating surfaces (36);

and

(c) wherein the chain (16) is of the type, known per se, formed of alternating pin links (32) and block links (30), the central connecting means being joined only to the block links (30), the block links having a transverse hole (31) formed at each end thereof for receiving a pin (33) of a pin link (32) and the hole (31) being sufficiently larger in diameter than the pin (33) that the block link (30) is capable of a predetermined degree of lateral tilting before the block link (30) applies twisting torque to the pin (33), and wherein the stabilizer means (26) are oriented with respect to the central connecting means (28) such that a stabilizer means contacts an operating surface (36) in force bearing relationship when the carriage (12) is laterally unevenly weighted prior to the time that a block link (30) applies substantial twisting force to a pin (33).

2. The conveyor of claim 1, characterized in that said conveyor track assembly (14) comprises a longitudinally extending, vertically oriented web (34) and a flange (36) connected to the top edge of the web normally thereto, said flange (36) carrying the slide surface (38) on the top surface thereof.

3. The conveyor of claim 2, characterized in that said conveyor track assembly (14) further comprises a second flange (36) connected normally to said web (34) at the bottom edge thereof.

4. The conveyor of claim 3, characterized in that each of said flanges (36) is connected to the web (34) along the longitudinal central axis of the flange.

5. The conveyor of claim 1, characterized in that said conveyor track assembly (14) comprises a plurality of discrete track segments joined by local uniting means (64), each discrete segment having a regular geometric shape selected from the group consisting of straight segments, horizontally curved segments, and vertically curved segments.

6. The conveyor of claim 5, characterized in that said segments are joined in substantial abutment and said uniting means comprise lap plates (64).

7 The conveyor of claim 5, characterized in that a track segment comprises an I-beam base having a central web (34) joined to a top and bottom flange (36), said flanges (36) carrying the slide surface (38) axially thereon, the flanges and slide surfaces defining aligned dropout holes (60) therethrough, and the beam web defining an opening (62) undercutting the dropout hole (60) of the flange.

8. The conveyor of claim 5, characterized in that said chain slide surface (38) further comprises a bevel (68) at the longitudinal ends of said track segments to define a smooth, continuous chain path between adjacent track segments with only approximate alignment of the track segments.

## Revendications

1. Convoyeur perfectionné qui peut fonctionner comme un convoyeur à raclettes sensiblement sur la totalité de sa longueur, le convoyeur étant du type comportant: un brin supérieur et un brin inférieur avec une courroie sans fin (13) s'étendant longitudinalement et adaptée pour suivre un trajet courbé latéralement et verticalement; un agencement de piste (14) de convoyeur s'étendant longitudinalement et comportant une surface de circulation supérieure (36) supportant la courroie dans le brin supérieur; une chaîne (16) de convoyeur apte à un fléchissement à la fois latéral et vertical avec le trajet de la courroie; un chariot (12) de courroie fixé à la courroie (13) de convoyeur et s'étendant transversalement à cette dernière, ce chariot comportant un moyen de liaison centrale (28) assemblant le chariot à la chaîne (16) de convoyeur sensiblement au centre transversal de la courroie (13) et supportant la courroie au-dessus de la chaîne le long du brin supérieur du convoyeur; et une paire de moyens de stabilisation (26) espacés latéralement, flanquant le moyen de liaison central (28) et recouvrant la surface de circulation supérieure; caractérisé en ce qu'il comprend:

(a) une surface (38) de glissement de chaîne orientée longitudinalement entraînée sur ladite surface de circulation supérieure (36) et comportant une paroi inférieure (40) supportée contre la surface de circulation supérieure (38) et supportant la face inférieure de la chaîne (16) directement sur elle-même le long sensiblement de la totalité de la longueur du brin supérieur du convoyeur, la surface de glissement comportant une paire de parois latérales opposées (42) espacées l'une de l'autre, s'étendant de façon sensiblement perpendiculaire à la paroi inférieure (40) et enfermant les côtés de la chaîne, et la surface de glissement (38) comprenant en outre une paire de rebords supérieurs opposés (44) dirigés vers l'intérieur, assemblés aux parois latérales (42) et formant entre eux une fente longitudinale pour permettre le passage dudit moyen de liaison central (28) et pour supporter la chaîne directement sur lesdits rebords dans le brin inférieur du convoyeur, ladite surface de circulation supérieure comprenant sur chaque côté latéral de la surface de glissement une surface (36) de fonctionnement de stabilisateur;

(b) ladite paire de moyens de stabilisation espacés latéralement (26) recouvrant les surfaces (36) de fonctionnement de stabilisateur lorsque la chaîne (16) recouvre ladite paroi inférieure (40) de la surface de glissement, les moyens de stabilisation (26) étant orientés par rapport au moyen de liaison central (28) et de la chaîne (16) de telle sorte que, sensiblement d'un bout à l'autre du brin supérieur du convoyeur, lorsque le chariot (12) est chargé de façon uniforme latéralement, la chaîne soit en contact d'appui forcé avec la surface de glissement (38) et les moyens de stabilisation (26) ne soient pas en contact d'appui forcé avec lesdites surfaces de fonctionnement (36); et

(c) dans lequel la chaîne (16) est du type, connu en soi, formé de maillons extérieurs (32) et de maillons intérieurs (30) alternés, le moyen de liaison central étant assemblé uniquement aux maillons intérieurs (30), les maillons intérieurs comportant un trou transversal (31) formé à chacune de leurs extrémités pour recevoir un axe (33) d'un maillon extérieur (32) et le trou (31) ayant un diamètre suffisamment plus grand cue le diamètre de l'axe (33) pour que le maillon intérieur (30) soit capable d'effectuer un degré predéterminé d'inclinaisons latérales avant que le maillon intérieur (30) n'applique un couple de torsion à l'axe (33), et dans lequel les moyens de stabilisation (26) sont orientés par rapport au moyen de liaison central (28) de telle sorte qu'un moyen de stabilisation soit en contact d'appui forcé avec une surface de fonctionnement (36) lorsque le chariot (12) est chargé de façon non-uniforme latéralement avant le moment où un maillon intérieur (30) applique une force de torsion notable à un axe (33).

2. Le convoyeur de la revendication 1, caractérisé en ce que ledit agencement (14) de piste de convoyeur comprend une âme (34) orientée verticalement et s'étendant longitudinalement, et une semelle (36) raccordée au bord supérieur de l'âme perpendiculairement à cette dernière, ladite semelle (36) portant la surface de glissement (38) sur sa surface supérieure.

3. Le convoyeur de la revendication 2, caractérisé en ce que ledit agencement (14) de piste de convoyeur comprend en outre une seconde semelle (36) raccordée perpendiculairement à ladite âme (34) à son bord inférieur.

4. Le convoyeur de la revendication 3, caractérisé en ce que chacune desdites semelles (36) est raccordée à l'âme (34) le long de l'axe central longitudinal de la semelle.

5. Le convoyeur de la revendication 1, caractérisé en ce que ledit agencement (14) de piste de convoyeur comprend une pluralité de segments de piste discrets assemblés par des moyens d'assemblage locaux (64), chaque segment discret ayant une forme géométrique régulière choisie parmi le groupe comprenant des segments rectilignes, des segments courbés horizontalement, et des segments courbés verticalement.

6. Le convoyeur de la revendication 5, caractérisé en ce que lesdits segments sont assemblés bout à bout solidement et lesdits moyens d'assemblage comprennent des plaques de recouvrement (64).

7. Le convoyeur de la revendication 5, caractérisé en ce qu'un segment de piste comprend une base en poutre en I comportant une âme centrale (34) raccordée à une semelle supérieure et inférieure (36), lesdites semelles (36) portant axialement sur elles-mêmes la surface de glissement (38), les semelles et les surfaces de glissement étant traversées par des trous d'évacuation alignés (60) et l'âme de la poutre comportant une ouverture (62) découpée de façon sous-jacente au trou d'évacuation (60) de la semelle.

8. Le convoyeur de la revendication 5, caractérisé en ce que la surface (38) de glissement de chaîne comprend en outre un chanfrein (68) aux extrémités longitudinales desdits segments de piste de manière à former un trajet de chaîne continu uniforme entre les segments de piste adjacents avec un alignement seulement approximatif des segments de piste.

**Patentansprüche**

1. Gleitförderer, der als Schleppkettenförderer über im wesentlichen seine gesamte Länge gefahren werden kann, wobei der Förderer eine obere und eine untere Laufbahn mit einem endlos sich längs erstreckenden Gurt (13) aufweist, der einem horizontal und vertikal gekrümmten Weg folgen kann; wobei die längs verlaufende Fördererbahnvorrichtung (14) eine obere Lauffläche (36) aufweist, die den Gurt im oberen Lauf abstützt; wobei die Fördererkette (16) sich sowohl horizontal als auch vertikal mit dem Weg des Gurts biegen kann; mit einem Gurtträger (12), der mit dem Fördergurt (13) verbunden ist und sich dazu quer erstreckt, und der eine mittige Verbindungsvorrichtung (28) aufweist, die den Träger mit der Förderkette (16) im wesentlichen in der Quermitte des Gurtes (13) verbindet und den Gurt oberhalb der Kette entlang dem oberen Lauf des Förderers abstützt; und mit einem Paar von seitlich beabstandeten Stabilisiervorrichtungen (26), die die mittige Verbindungsvorrichtung (28) flankieren und die obere Lauffläche übergreifen; dadurch gekennzeichnet, daß er aufweist:

(a) eine längsgerichtete Kettengleitfläche (38), die auf der oberen Lauffläche (36) gehalten ist und eine Bodenwandung (40) aufweist, die sich an der oberen Lauffläche (38) abstützt und die die untere Fläche der Kette (16) direkt darauf abstützt entlang im wesentlichen der gesamten Länge des oberen Laufs des Förderers, wobei die Gleitfläche ein Paar von voneinander beabstandeten gegenüberliegenden Seitenwandungen (42) aufweist, die sich im wesentlichen senkrecht zur Bodenwandung (40) erstrecken und die Seiten der Kette einschließen, und wobei die Gleitfläche (38) ferner ein Paar von einander gegenüberliegenden einwärts gerichteten Kopfflanschen (44) aufweist, die an den Seitenwandungen (42) befestigt sind und einen Längsschlitz dazwischen bilden, um der mittigen Verbindungsvorrichtung (28) den Durchgriff zu gestatten und die Kette direkt auf den Flanschen im unteren Lauf des Förderers abzustützen, wobei die obere Lauffläche auf jeder Seitenfläche der Gleitoberfläche eine Stabilisierfläche (36) aufweist;

(b) ein Paar von seitlich beabstandeten Stabilisatoren (26), die die Stabilisierflächen (36) übergreifen, wenn die Kette (16) über der Gleitflächenbodenwandung (40) liegt, wobei die Stabilisiervorrichtung (26) bezüglich der mittigen Verbindungsvorrichtung (28) und der Kette (16) so ausgerichtet ist, daß im wesentlichen während des oberen Laufs des Förderers, wenn der Träger (12) seitlich gliechbelastet ist, die Kette in kraftübertragendem Kontakt mit der Gleitfläche (38) ist und die Stabilisiervorrichtung (26) ohne kraftübertragenden Kontakt mit der Betriebsfläche (36) ist; und

(c) wobei die Kette (16) vom an sich bekannten Type ist, der aus abwechselnden Bolzengliedern (32) und Blockgliedern (30) besteht, wobei die mittige Verbindungsvorrichtung nur auf den Blockgliedern (30) befestigt ist, die Blockglieder ein Querloch (31) an jedem ihrer Enden aufweisen, um einen Bolzen (33) des Bolzenglieds (32) aufzunehmen, und das Loch (31) ausreichend größer im Durchmesser als der Bolzen (33) ist, damit das Blockglied sich um einen vorbestimmten Winkel seitlich versetzen kann, bevor das Blockglied (30) eine Verdrehkraft auf den Bolzen (33) ausübt, und bei welchem die Stabilisiervorrichtung (26) bezüglich der mittigen Verbindungsvorrichtung (28) so ausgerichtet ist, daß die Stabilisierrichtung die Stabilisierfläche (36) kraftübertragend berührt, wenn der Träger (12) seitlich ungleich belastet ist, bevor ein Blockglied (30) eine erhebliche Verdrehkraft auf einen Bolzen (33) überträgt.

2. Förderer nach Anspruch 1, dadurch gekennzeichnet, daß die Fördererbahnanordnung (14) eine sich längs erstreckende, vertikal ausgerichtete Bahn (34) und eine Flansch (36) aufweist, der an der Oberkante der Bahn senkrecht dazu verbunden ist, wobei der Flansch (36) die Gleitfläche (38) auf seiner Oberfläche trägt.

3. Förderer nach Anspruch 2, dadurch gekennzeichnet, daß die Fördererbahnanordnung (14) ferner einen zweiten Flansch (36) aufweist, der senkrecht zur Bahn (34) an dessen Unterkante befestigt ist.

4. Förderer nach Anspruch 3, dadurch gekennzeichnet, daß jeder der Flansche (36) an der Bahn (34) entlang der Längsmittenachse des Flansches befestigt ist.

5. Förderer nach Anspruch 1, dadurch gekennzeichnet, daß die Fördererbahnanordnung (14) eine Vielzahl von diskreten Bahnsegmenten enthält, die durch Verbindungsvorrichtungen (64) miteinander verbunden sind, wobei jedes einzelne Segment eine regelmäßige geometrische Form hat, nämlich z.B. ein gerades Segment, ein horizontal gekrümmtes Segment oder ein vertikal gekrümmtes Segment ist.

6. Förderer nach Anspruch 5, dadurch gekennzeichnet, daß die Segmente im wesentlichen auf Stoß miteinander verbunden sind und die Befestigungsvorrichtung Befestigungslappen (64) aufweist.

7. Förderer nach Anspruch 5, dadurch gekennzeichnet, daß ein Bahnsegment einen I-Träger-Grund-Körper aufweist, der eine Mittenbahn (34) aufweist, die an einem oberen und einem unteren Flansch (36) befestigt ist, wobei die Flansche (36) die Gleitflächen (38) axial tragen, wobei die Flansche und Gleitflächen fluchtende Ablaßöffnungen (60) tragen, und wobei die Trägerbahn eine Offnung (32) bildet, die unter dem Ablaßloch (60) des Flansches liegt.

8. Förderer nach Anspruch 5, dadurch gekennzeichnet, daß die Kettengleitfläche (38) ferner eine Anschrägung (68) am Längsende des Bahnsegments aufweist, um einen glatten durchgehenden Kettenweg zwischen aneinander anliegenden Bahnelementen zu bilden, auch wenn die Bahnelemente nur ungefähr fluchten.

Fig.1

*Fig.2*

*Fig.3*

*Fig.4*

*Fig.5*

Fig.6

Fig.7

0025 676